# FASCICULE DE BREVET EUROPEEN

(11) **EP 3 010 858 B1**
(45) Date de publication et mention de la délivrance du brevet: **15.12.2021**
(21) Numéro de dépôt: 14738747.6
(22) Date de dépôt: 16.06.2014
(51) Int. Cl.: C02F 1/02, A61L 2/04

(54) **UNITÉ DE DÉCONTAMINATION D'UN FLUIDE POTENTIELLEMENT PATHOGÈNE ET INSTALLATION DE DÉCONTAMINATION COMPRENANT UNE TELLE UNITÉ**
DEKONTAMINATIONSEINHEIT FÜR EINE POTENZIELL PATHOGENE FLÜSSIGKEIT UND DEKONTAMINATIONSANLAGE MIT SOLCH EINER EINHEIT
DECONTAMINATION UNIT FOR A POTENTIALLY PATHOGENIC FLUID AND DECONTAMINATION INSTALLATION INCLUDING SUCH A UNIT

(30) Priorité: 18.06.2013 FR 1355689
(43) Date de publication de la demande: 27.04.2016
(73) Titulaire: Actini, 74500 Maxilly Sur Leman (FR)
(72) Inventeur: DE STOUTZ, Frédéric, Laurent, F-74500 Larringes (FR)
(74) Mandataire: Croonenbroek, Thomas Jakob
(86) Numéro de dépôt international: PCT/EP2014/062543
(87) Numéro de publication internationale: WO 2014/202520

(56) Documents cités:
- WO-A1-92/09310
- WO-A2-2008/121792
- DE-A1- 19 504 479
- DE-A1-102007 008 899
- DE-U1- 29 709 925
- FR-A- 588 996
- FR-A1- 2 820 419
- None

## Description

La présente invention concerne une unité de décontamination d'un fluide potentiellement pathogène et une installation de décontamination comprenant une telle unité.

L'invention s'applique notamment dans le cadre des unités de traitement d'effluents potentiellement contaminés par des germes ou agents infectieux tels que des virus, des bactéries, des parasites (protozoaires, helminthes) ou encore des protéines de type prions.

Dans les laboratoires ou des hôpitaux, le personnel est souvent en contact (certes généralement indirect via des gants) avec des fluides potentiellement pathogènes suite à des prélèvements ou des manipulations dans le cadre de leur travail ou doivent manipuler des objets, par exemple des récipients ou éprouvettes, qui avaient été en contact avec un tel fluide pathogène ce qui nécessite un lavage à exemple sous l'eau des objets ou parties du corps qui avaient été en contact avec le fluide pathogène.

L'eau ayant servie pour le lavage / nettoyage est donc potentiellement contaminée et ne peut pas être mise à l'égout sans qu'une décontamination ait été opérée au préalable.

A cet effet, dans la majorité des laboratoires et des hôpitaux, les points d'eaux et notamment les éviers sont raccordés à un circuit d'effluents allant vers une installation centrale de décontamination.

Cependant, en fonction de la taille des laboratoires, hôpitaux ou centres de recherches ainsi que leurs activités précises, les quantités d'eaux utilisées sont faibles et l'investissement dans une installation centrale de traitement de décontamination thermique est trop élevé, d'autant plus qu'il faut prévoir pour un bâtiment un circuit spécifique des eaux potentiellement contaminées en parallèle du circuit des eaux usées standards.

D'autres établissements qui disposent de plusieurs laboratoires préfèrent ne pas centraliser la collecte des effluents pour un traitement commun pour ne pas risquer de « casser » le confinement de leur salle et privilégieront un traitement sur place.

Pour pallier à ce problème, il est connu de prévoir une installation locale et autonome de décontamination de petite taille.

Toutefois, les installations connues ne donnent pas satisfaction.

En effet, on connaît du document JPH03157185 une installation comportant deux unités de décontamination de sorte que l'eau contaminée peut être reçue dans une unité tandis que l'autre unité chauffe lors d'un cycle de décontamination.

Or, cette installation est assez onéreuse étant donné qu'il faut prévoir deux unités de décontamination complètes avec leurs éléments de chauffe, de contrôle et de vannes. En outre, cette installation nécessite l'utilisation d'une pompe pour faire circuler les fluides potentiellement contaminés ce qui est source de bruit et peut poser un problème de sécurité en cas de défaillance d'étanchéité de la pompe.

De plus, l'élément chauffant 9a ou 9b de ce document pénètre directement dans la cuve de décontamination ce qui présente deux inconvénients.

En effet, le corps de chauffe est directement en contact avec le fluide contaminé de sorte que du calcaire peut se déposer directement sur les éléments chauffants et diminuer ensuite le transfert thermique, ce qui résulte en une dépense énergétique plus grande et inutile ainsi qu'un risque que la température de chauffe nécessaire pour une décontamination efficace (par exemple 135°C) n'est plus atteinte. De plus, la maintenance de ces éléments chauffants est difficile étant donné le montage intégré dans la cuve et le fait qu'ils avaient été en contact avec les fluides potentiellement pathogènes.

En outre, le demandeur a constaté un gradient de température entre le haut et le bas de la cuve du document précité, ce qui constitue aussi un risque étant donné que les conditions de décontamination pour le fluide en bas de la cuve n'ont probablement pas été respectées du fait d'une température trop faible.

Par ailleurs, le document DE29709925 décrit un stérilisateur pour des eaux usées. Toutefois, il nécessite des moyens mécaniques de brassage lors de la stérilisation.

Le document DE10 2007 008 988 est relatif à un dispositif pour faire bouillir de l'eau qui comporte une fonction de stérilisation pour obtenir de l'eau potable qui n'est pas adapté pour le traitement d'un fluide potentiellement pathogène.

Le document WO2008/121792 décrit un dispositif de nettoyage et de stérilisation d'instruments de chirurgie qui sont placés dans des paniers. Ce dispositif n'est pas non plus adapté pour le traitement d'un fluide potentiellement pathogène.

Afin de pallier au moins partiellement les défauts précédemment mentionnés, l'invention a pour objet une unité de décontamination améliorée conformément à la revendication 1.

Ainsi, en fixant les éléments chauffants directement contre le fond du volume de la cuve de traitement, ceux-ci ne sont plus en contact BRT1263 avec le fluide potentiellement pathogène. Il en résulte qu'il n'y a plus de formation de calcaire ou tartre sur les éléments chauffants de sorte que leur efficacité n'est pas altérée dans le temps. De plus, par la disposition des éléments chauffants, on s'assure d'un chauffage plus homogène du fluide potentiellement pathogène et on évite des zones mortes.

Grâce au fond incliné, le calcaire ou tartre qui peut se former sur le fond va s'accumuler en bas de la pente pour ensuite être évacué à la fin du cycle de décontamination avec le fluide décontaminé.

De plus, par cette inclinaison du fond, lors du chauffage par les éléments chauffants, on induit dans la cuve de traitement un mouvement circulaire (du bas vers le haut) du fluide potentiellement pathogène ce qui contribue à un chauffage très homogène de ce fluide, ce qui est important pour assurer une bonne décontamination des agents infectieux dans le fluide. Ainsi, on peut assurer ce chauffage homogène sans moteur électrique supplémentaire, ce qui revient moins cher et ce qui est aussi plus fiable d'un point de vue maintenance.

L'invention peut en outre comprendre une ou plusieurs des caractéristiques suivantes prises seules ou en combinaison :
L'élément chauffant est par exemple une résistance plate circulaire.

Selon un autre aspect l'unité comprend plusieurs, au moins deux résistances plates concentriques.

Selon un autre aspect, la cuve de traitement est réalisée en acier inoxydable, de préférence du type 316L.

L'invention concerne également une installation de décontamination comprenant
- un évier de recueillement des fluides potentiellement pathogènes,
- une cuve de stockage du fluide potentiellement pathogène recueilli raccordé fluidiquement à l'évier,
- une unité de décontamination telle que décrite ci-dessus dont l'entrée est raccordée fluidiquement à la sortie de la cuve de stockage, et
- un échangeur thermique dont l'entrée est raccordée fluidiquement à la sortie de l'unité de décontamination.

Selon un aspect, l'évier est disposé au-dessus de la cuve de stockage, la cuve de stockage est disposée au-dessus de l'unité de décontamination, et l'unité de décontamination est disposée au-dessus de l'échangeur thermique de sorte que la circulation des fluides potentiellement pathogènes dans l'installation est réalisée par gravité.

Selon un autre aspect, l'installation comprend une première vanne de régulation disposée dans une canalisation raccordant la cuve de stockage à l'unité de décontamination et une seconde vanne de régulation disposée dans une canalisation raccordant l'unité de décontamination à l'échangeur thermique.

D'autres caractéristiques et avantages apparaîtront à la lecture de la description des figures suivante, parmi lesquelles :
- la figure 1 est un schéma de principe de l'installation de décontamination selon un mode de réalisation,
- la figure 2 est une vue schématique de côté d'une réalisation de l'installation de décontamination selon un mode de réalisation,
- la figure 3 montre un détail de la figure 2, en particulier l'unité de décontamination selon un mode de réalisation,
- la figure 4 est une vue schématique en coupe d'une réalisation de l'installation de décontamination selon un mode de réalisation, et
- la figure 5 est un organigramme montrant un exemple de différentes étapes d'un procédé de décontamination.

Sur toutes les figures, les mêmes éléments portent les mêmes numéros de référence.

On va décrire ci-après en référence aux différentes figures un mode de réalisation de la présente invention.

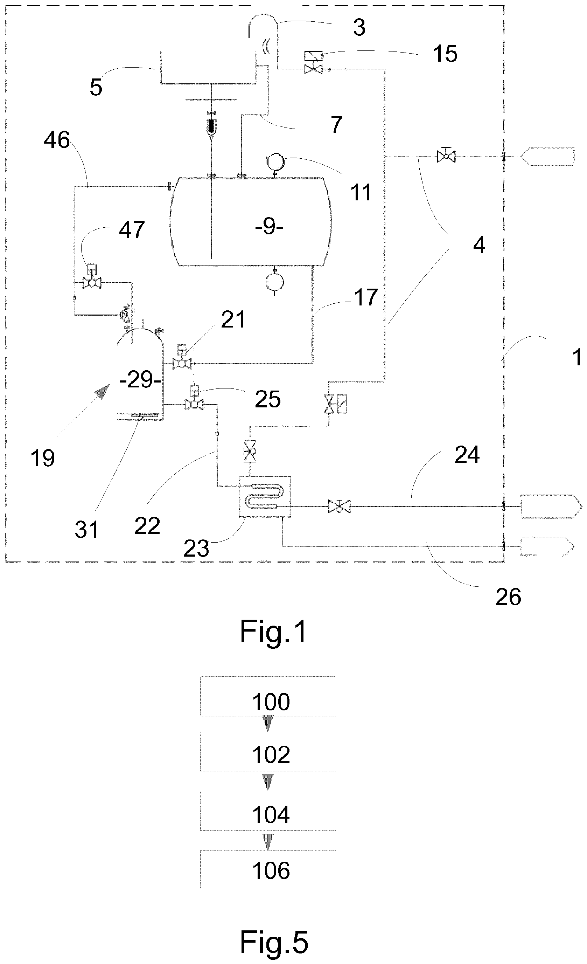

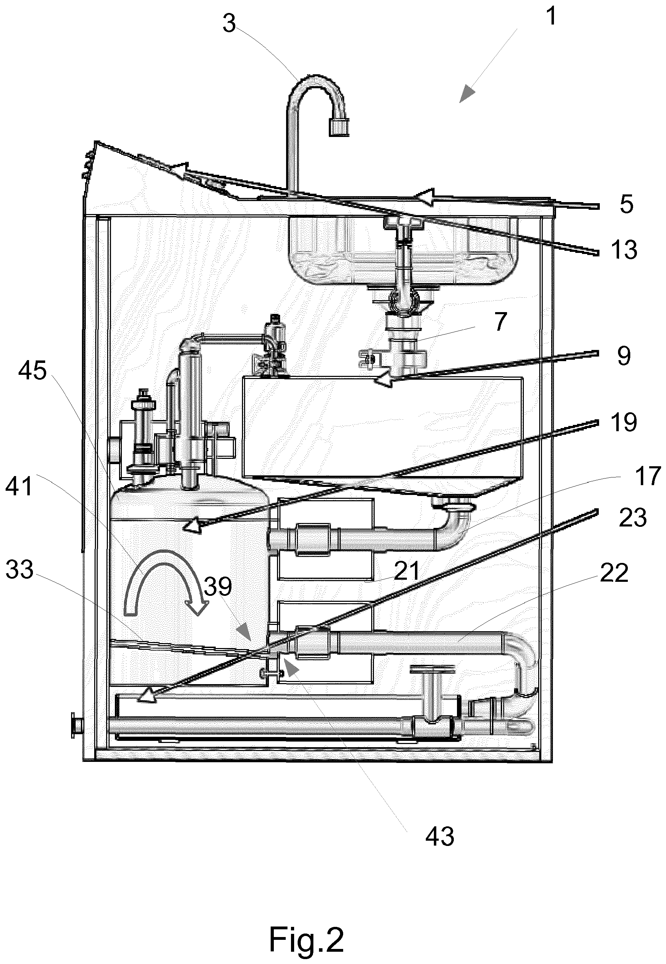

La figure 1 montre un schéma de principe d'une installation de décontamination 1 selon un mode de réalisation et la figure 2 montre une vue schématique de côté d'une réalisation de l'installation de décontamination 1.

Ainsi, l'installation de décontamination 1 comprend par exemple un robinet 3 d'eau de ville raccordée à une arrivée 4 d'eau de ville pour le pré-nettoyage ou lavage d'objets, par exemple des éprouvettes. De préférence, le robinet peut être actionné sans contact, par exemple via un capteur infrarouge ou un capteur capacitif. En dessus de la sortie du robinet 3 est agencé un évier 5 de recueillement des fluides potentiellement pathogènes, c'est-à-dire des résidus d'éprouvettes contenant par exemple des agents infectieux. L'évier 5 est par exemple réalisée en inox type 304.

La sortie de l'évier 5 est raccordée par une canalisation d'évacuation 7 à l'entrée d'une cuve de stockage 9 placée en dessous de l'évier 5 de sorte les fluides potentiellement pathogènes et contaminés sont évacués par gravité dans la cuve de stockage 9.

Cette cuve de stockage 9 est par exemple réalisée en inox du type 316L et peut avoir une contenance par exemple de 25l.

Comme on peut le voir sur la figure 1, la cuve de stockage 9 est équipée d'un capteur de niveau 11. Ce dernier est relié à une unité de contrôle (tableau de commande 13 visible à la figure 2) pour sonder le niveau dans la cuve de stockage 9, enclencher selon le niveau atteint un cycle de décontamination et, le cas échéant, bloquer une vanne d'arrêt 15 d'eau de ville alimentant le robinet 3 afin d'éviter un débordement de fluide pathogène dans l'évier 5.

La sortie de la cuve de stockage 9 est raccordée par une canalisation 17 à une unité 19 de décontamination qui est disposée en dessous de la cuve de stockage 9 de sorte que les fluides potentiellement pathogènes se déversent par gravité dans l'unité de décontamination 19. Une vanne de régulation 21 disposée dans la canalisation reliant la cuve de stockage 9 à l'unité de décontamination 19 permet de réguler le flux, par exemple pour le remplissage de la cuve de décontamination 19 et est commandé par l'unité de contrôle 13.

La sortie de l'unité de décontamination 19 est raccordée via une canalisation 22 à une entrée d'un échangeur thermique 23 destiné à refroidir le fluide décontaminé en sortie de l'unité de décontamination 19. Une autre entrée de l'échangeur thermique 23 est raccordée à l'eau de ville.

L'échangeur thermique 23 dispose de deux sorties, une sortie de fluide décontaminé et refroidi 24 et une sortie d'eau de ville 26 ayant servi de liquide de refroidissement dans l'échangeur thermique 23. Ainsi le réseau d'eau de ville est toujours séparé des canalisations du fluide décontaminé de sorte qu'il n'y a pas de possibilité d'une contamination retour, ce qui augmente encore la sécurité de l'installation décrite ici.

Comme on le voit sur la figure 2, l'échangeur thermique 23 de forme allongée pour maximiser les surfaces d'échange est disposé en dessous de l'unité de décontamination 19 de sorte que le fluide décontaminé en sortie de l'unité de décontamination 19 peut transiter aussi par gravité.

Une vanne de régulation 25 (figure 1) disposée dans la canalisation 22 reliant l'unité de décontamination 19 à l'échangeur thermique 23 permet de réguler le flux, par exemple pour évacuer la cuve de décontamination 19 et est commandée par l'unité de contrôle 13.

On va maintenant décrire plus en détail l'unité de décontamination 19 de fluides potentiellement pathogènes.

Cette unité de décontamination 19 comprenant une cuve 29 de traitement, par exemple réalisée en acier inoxydable, de préférence du type 316L, et au moins un élément chauffant 31, de préférence plusieurs éléments chauffants. Le volume de la cuve de traitement est par exemple de 12l.

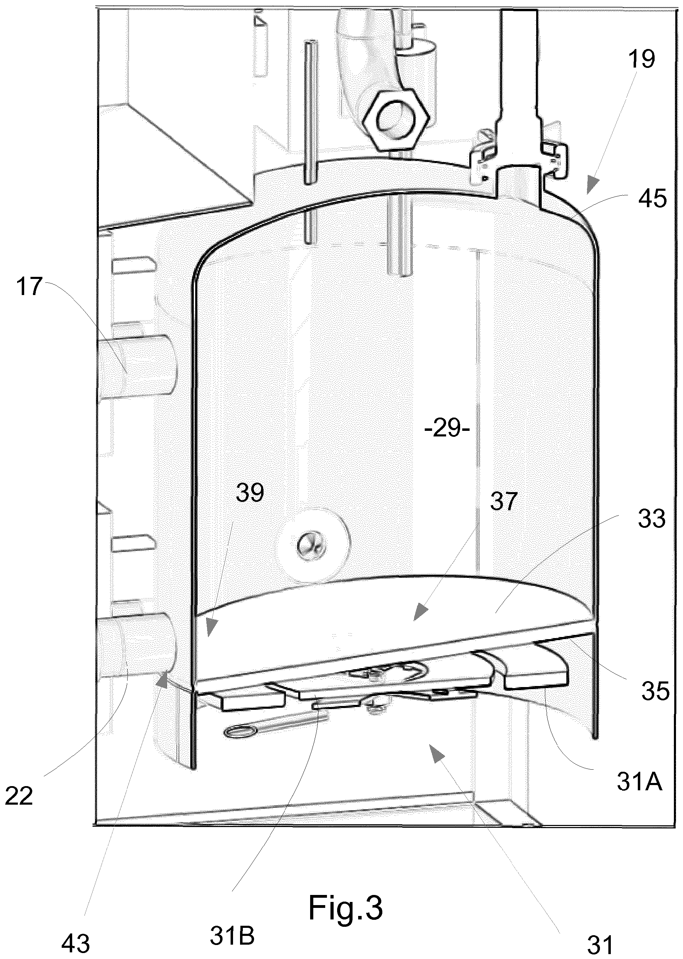

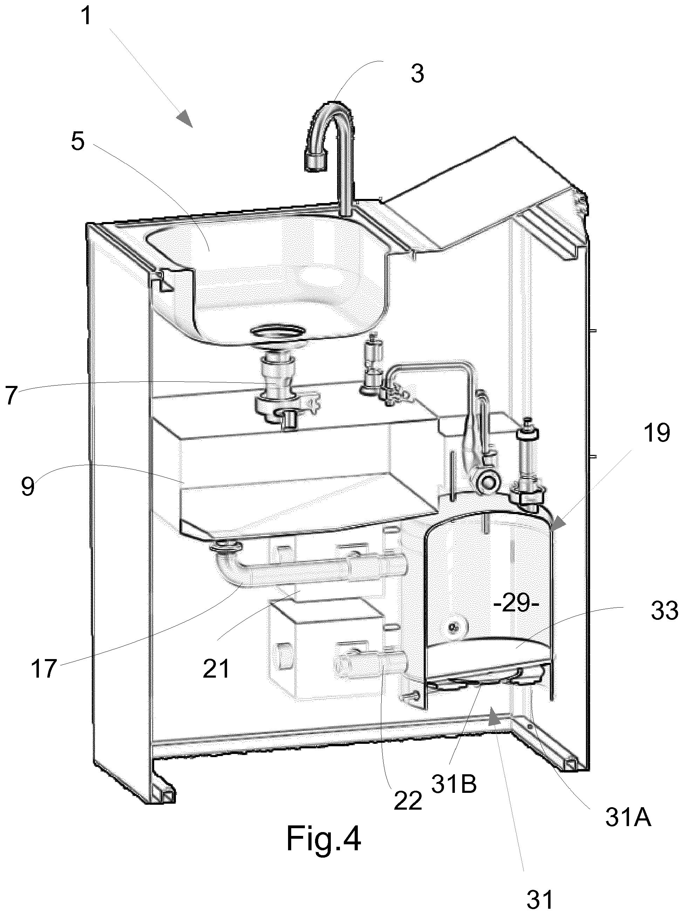

Comme on le voit sur les figures 2 à 4, la cuve de traitement 29 comprend un fond plan 33 ou plat de cuve et deux éléments chauffants 31A et 31B (voir figures 3 et 4) plats, circulaires et concentriques, par exemple de 2,3kW de puissance sont fixés, par exemple avec un montage mécanique boulonné en croix, sur le côté extérieur 35 du fond plan 33 opposé au côté intérieur 37 destiné à être en contact avec le fluide potentiellement pathogène.

Ainsi, en fixant les éléments chauffants 31A et 31B directement contre le fond du volume de la cuve de traitement 29, ceux-ci ne sont plus en contact avec le fluide potentiellement pathogène. Il en résulte qu'il n'y a plus de formation de calcaire ou tartre sur les éléments chauffants de sorte que leur efficacité n'est pas altérée dans le temps. De plus, par la disposition des éléments chauffants, on s'assure d'un chauffage plus homogène du fluide potentiellement pathogène et on évite des zones mortes.

Comme on le voit sur les figures 2 à 4, le fond plan 33 de la cuve de traitement 29 est incliné entre 5%-10%, de préférence de 7% (c'est-à-dire faisant un angle de 4° par rapport à l'horizontale).

Ceci a pour conséquence que le calcaire ou tartre qui peut se former sur le fond va s'accumuler en bas de la pente (voir flèche 39) pour ensuite être évacué à la fin du cycle de décontamination avec le fluide décontaminé.

De plus, par cette inclinaison du fond, lors du chauffage par les éléments chauffants 31A et 31B, on induit dans la cuve de traitement 29 un mouvement circulaire (du bas vers le haut) du fluide potentiellement pathogène (voir flèche 41 sur la figure 2) ce qui contribue à un chauffage très homogène de ce fluide, ce qui est important pour assurer une bonne décontamination des agents infectieux dans le fluide.

Par ailleurs, la sortie 43 de la cuve de traitement 29 est aménagée au niveau du fond du plan incliné 33, en bas de la pente, ce qui favorise aussi l'évacuation de résidus ou particules (par exemple tartre ou calcaire) après un cycle de décontamination.

En outre, le haut de la cuve de traitement 29 présente la forme d'un dôme 45 pour servir de vase d'expansion lors de la chauffe. Ainsi, lors de la chauffe, la pression dans la cuve de traitement 29 va monter à environ 3,5bars. Cette pression est ensuite utilisée pour évacuer la cuve de traitement 29 après un cycle de décontamination.

La cuve de traitement 29 est en outre équipée d'un capteur de niveau bas, d'une soupape de sécurité (par exemple tarée à 7bars) et de deux sondes de température, en position basse pour la régulation de température de chauffage et en position haute pour valider que la température de consigne a bien été atteinte.

Une canalisation 46 entre le dôme 45 de la cuve de traitement 29 et la cuve de stockage 9 munie d'une vanne de régulation 47 permet une égalisation de pressions entre ces deux cuves, notamment lors du remplissage de la cuve de traitement 29.

On va maintenant décrire un exemple de fonctionnement de l'installation 1 décrite ci-dessus en supposant que la cuve de stockage 9 a été remplie avec un fluide potentiellement pathogène à un niveau déclenchant un cycle de décontamination et en référence à la figure 5.

Selon une première étape 100, on remplit la cuve de traitement 29 avec un fluide potentiellement pathogène en laissant un volume gazeux d'expansion à l'intérieur de la cuve de traitement 29 au niveau du dôme 45. Dans le présent exemple, le volume de traitement est seulement de 8l de manière à laisser un volume libre gazeux pour l'expansion.

Puis, selon une seconde étape 102, on chauffe le fluide potentiellement pathogène à une température comprise entre 130°C et 140°C, de préférence à 135°C pendant une durée comprise entre 1,5 min et 3min, de préférence pendant 2min, en laissant augmenter la pression dans la cuve de traitement, par exemple ici autour de 3,5bars. On note que la pression dans la cuve de traitement 29 n'est pas régulée et résulte simplement de la température de chauffage, de la durée de chauffage du fluide dans la cuve de traitement 29 et du volume de fluide potentiellement pathogène admis dans la cuve de traitement qui sont choisis de façon à ce que la pression dans la cuve de traitement 29 reste inférieure à la pression de tarage de la soupape de sécurité, cette dernière ne fonctionnant qu'en cas de problème, par exemple de surchauffe.

Enfin, selon une étape 104, on évacue le fluide ainsi décontaminé à l'aide de la pression qui s'est établie lors du chauffage.

Puis, le fluide décontaminé est refroidi lors d'une étape 106 dans l'échangeur thermique 23.

Grace à la conception de la présente installation, celle-ci ne produit pratiquement pas de bruit étant donné qu'il n'y a pas de pompe(s) pour faire circuler les fluides.

On comprend donc que l'unité de décontamination permet une décontamination efficace et présente une fiabilité accrue. De plus, sa maintenance est aisée et ne présente pas de difficultés particulières.

## Revendications

1. Unité de décontamination (19) de fluides potentiellement pathogènes comprenant une cuve de traitement (29) et au moins un élément chauffant (31), **caractérisée en ce que** la cuve de traitement (29) comprend un fond plan (33) et au moins un élément chauffant (31) fixé sur le côté extérieur (35) du fond plan (33) opposé au côté intérieur (37) destiné à être en contact avec le fluide potentiellement pathogène, la cuve de traitement (29) étant configurée pour permettre de laisser augmenter la pression dans la cuve de traitement (29) lors du chauffage à une température comprise entre 130°C et 140°C, **en ce que** le fond plan (33) de la cuve de traitement (29) est incliné entre 5%-10% afin d'assurer un chauffage homogène du fluide potentiellement pathogène sans moteur électrique et **en ce qu'**une sortie (43) de la cuve de traitement (29) est ménagée au niveau du fond plan incliné (33), en bas de la pente (39).

2. Unité de décontamination selon la revendication 1, **caractérisée en ce que** l'élément chauffant (31) est une résistance plate circulaire.

3. Unité de décontamination selon la revendication 2, **caractérisée en ce qu'**elle comprend plusieurs, au moins deux résistances plates concentriques (31a, 31B).

4. Unité de décontamination selon l'une quelconque des revendications 1 à 3, **caractérisée en ce que** la cuve de traitement (29) est réalisée en acier inoxydable, de préférence du type 316L.

5. Installation de décontamination (1) comprenant
- un évier (5) de recueillement des fluides potentiellement pathogènes,
- une cuve de stockage (9) du fluide potentiellement pathogène recueilli raccordé fluidiquement à l'évier,
- une unité de décontamination (19) selon l'une quelconque des revendications 1 à 4 dont l'entrée est raccordée fluidiquement à la sortie de la cuve de stockage (9), et
- un échangeur thermique (23) dont l'entrée est raccordée fluidiquement à la sortie de l'unité de décontamination (19).

6. Installation de décontamination selon la revendication 5, **caractérisée en ce que** l'évier (5) est disposé au-dessus de la cuve de stockage (9), **en ce que** la cuve de stockage (9) est disposée au-dessus de l'unité de décontamination (19), et **en ce que** l'unité de décontamination (19) est disposée au-dessus de l'échangeur thermique (23) de sorte que la circulation des fluides potentiellement pathogènes dans l'installation (1) est réalisée par gravité.

7. Installation selon la revendication 5 ou 6, **caractérisée en ce qu'**elle comprend une première vanne (21) de régulation disposée dans une canalisation (17) raccordant la cuve de stockage (9) à l'unité de décontamination (19) et une seconde vanne de régulation (25) disposée dans une canalisation (22) raccordant l'unité de décontamination (19) à l'échangeur thermique (23).

## Patentansprüche

1. Dekontaminationseinheit (19) für potenziell pathogene Flüssigkeiten, die einen Behandlungsbehälter (29) und mindestens ein Heizelement (31) umfasst, **dadurch gekennzeichnet, dass** der Behandlungsbehälter (29) einen ebenen Boden (33) und mindestens ein Heizelement (31) umfasst, das an der Außenseite (35) des ebenen Bodens (33) befestigt ist, die entgegengesetzt zur Innenseite (37) ist, die dazu bestimmt ist, mit der potenziell pathogenen Flüssigkeit in Kontakt zu sein, wobei der Behandlungsbehälter (29) dazu ausgelegt ist zu ermöglichen, den Druck im Behandlungsbehälter (29) beim Erhitzen auf eine Temperatur zwischen 130 °C und 140 °C steigen zu lassen, dass der ebene Boden (33) des Behandlungsbehälters (29) um 5 %-10 % geneigt ist, um eine gleichmäßige Erwärmung der potenziell pathogenen Flüssigkeit ohne Elektromotor zu gewährleisten, und dass ein Auslass (43) des Behandlungsbehälters (29) auf Höhe des geneigten Bodens (33) am unteren Ende des Gefälles (39) ausgebildet ist.

2. Dekontaminationseinheit nach Anspruch 1, **dadurch gekennzeichnet, dass** das Heizelement (31) ein runder flacher Widerstand ist.

3. Dekontaminationseinheit nach Anspruch 2, **dadurch gekennzeichnet, dass** sie mehrere, mindestens zwei konzentrische flache Widerstände (31a, 31B) umfasst.

4. Dekontaminationseinheit nach einem der Ansprüche 1 bis 3, **dadurch gekennzeichnet, dass** der Behandlungsbehälter (29) aus nichtrostendem Stahl ausgeführt ist, bevorzugt von der Sorte 316L.

5. Dekontaminationsanlage (1), umfassend
- ein Abflussbecken (5) zum Auffangen der potenziell pathogenen Flüssigkeiten,
- einen Speicherbehälter (9) zum Speichern der aufgefangenen potenziell pathogenen Flüssigkeit, der fluidisch mit dem Abflussbecken verbunden ist,
- eine Dekontaminationseinheit (19) nach einem der Ansprüche 1 bis 4, deren Einlass fluidisch mit dem Auslass des Speicherbehälters (9) verbunden ist, und
- einen Wärmetauscher (23), dessen Einlass fluidisch mit dem Auslass der Dekontaminationseinheit (19) verbunden ist.

6. Dekontaminationsanlage nach Anspruch 5, **dadurch gekennzeichnet, dass** das Abflussbecken (5) über dem Speicherbehälter (9) angeordnet ist, dass der Speicherbehälter (9) über der Dekontaminationseinheit (19) angeordnet ist und dass die Dekontaminationseinheit (19) über dem Wärmetauscher (23) angeordnet ist, so dass das Fließen der potenziell pathogenen Flüssigkeiten in der Anlage (1) per Schwerkraft erfolgt.

7. Anlage nach Anspruch 5 oder 6, **dadurch gekennzeichnet, dass** sie ein erstes Regulierventil (21) umfasst, das in einer Leitung (17) angeordnet ist, die den Speicherbehälter (9) mit der Dekontaminationseinheit (19) verbindet, und ein zweites Regulierventil (25), das in einer Leitung (22) angeordnet ist, welche die Dekontaminationseinheit (19) mit dem Wärmetauscher (23) verbindet.

## Claims

1. Decontamination unit (19) for potentially pathogenic fluids, comprising a treatment tank (29) and at least one heating element (31), **characterized in that** the treatment tank (29) comprises a flat bottom (33) and at least one heating element (31) fixed to the external side (35) of the flat bottom (33) which is the opposite to the internal side (37) intended to be in contact with the potentially pathogenic fluid, the treatment tank (29) being configured to allow the pressure in the treatment tank (29) to increase during the heating to a temperature of between 130°C and 140°C, **in that** the flat bottom (33) of the treatment tank (29) is inclined between 5%-10%, so as to ensure uniform heating of the potentially pathogenic fluid without the use of an electric motor, and **in that** an outlet (43) of the treatment tank (29) is formed at the inclined flat bottom (33), at the bottom of the slope (39).

2. Decontamination unit according to Claim 1, **characterized in that** the heating element (31) is a circular flat resistance.

3. Decontamination unit according to Claim 2, **characterized in that** it comprises several, at least two, concentric flat resistances (31a, 31B).

4. Decontamination unit according to any one of Claims 1 to 3, **characterized in that** the treatment tank (29) is made of stainless steel, preferably of type 316L.

5. Decontamination installation (1) comprising
- a sink (5) for collecting the potentially pathogenic fluids,
- a storage tank (9) for the potentially pathogenic fluid collected, connected fluidically to the sink,
- a decontamination unit (19) according to any one of Claims 1 to 4, the inlet of which is fluidically connected to the outlet of the storage tank (9), and
- a heat exchanger (23) the inlet of which is fluidically connected to the outlet of the decontamination unit (19).

6. Decontamination installation according to Claim 5, **characterized in that** the sink (5) is positioned above the storage tank (9), **in that** the storage tank (9) is positioned above the decontamination unit (19), and **in that** the decontamination unit (19) is positioned above the heat exchanger (23) so that circulation of the potentially pathogenic fluids in the installation (1) is achieved under gravity.

7. Installation according to Claim 5 or 6, **characterized in that** it comprises a first regulating valve (21) positioned in a pipe (17) connecting the storage tank (9) to the decontamination unit (19) and a second regulating valve (25) positioned in a pipe (22) connecting the decontamination unit (19) to the heat exchanger (23).
